# EUROPÄISCHE PATENTSCHRIFT

(11) **EP 1 967 780 B1**
(45) Veröffentlichungstag und Bekanntmachung des Hinweises auf die Patenterteilung: **29.09.2010**
(21) Anmeldenummer: 07004482.1
(22) Anmeldetag: 05.03.2007
(51) Int. Cl.: F16L 25/00, F16L 15/04, F16L 47/06

(54) **Endanschlussmittel für ein Wellrohr**
End connection device for a corrugated pipe
Embout de raccordement pour tube ondulé

(43) Veröffentlichungstag der Anmeldung: 10.09.2008
(73) Patentinhaber: Joseph Raab GmbH & Cie. KG, 56566 Neuwied (DE); AROSTA Schornsteintechnik GmbH, 30629 Hannover, OT Misburg (DE); LEWO B.V. rookgas afvoerkanalen, 3931 PC Woudenberg (NL); ONTOP B.V., 4332 SH Middelburg (NL); Karl Schräder Nachfolder Inh. Karl-Heinz Schräder, 59174 Kamen (DE); Camini Wierer S.p.A., 37055 Ronco all'Adige VR (IT); Fritz Hahn GmbH, 54294 Trier (DE)
(72) Erfinder: Junker, Jörg, 31157 Sarstedt (DE)
(74) Vertreter: Tiesmeyer, Johannes

(56) Entgegenhaltungen:
- EP-A- 0 545 410
- EP-A- 1 519 001
- DE-A1- 19 537 479
- DE-U1- 29 703 964
- US-A- 4 630 850

## Beschreibung

Die Erfindung betrifft ein Endanschlussmittel für ein Wellrohr gemäß dem Oberbegriff von Anspruch 1.

Wellrohre der hier betrachteten Art werden vorwiegend als Abgasleitungselemente in Abgasanlagen und als Belüftungsleitungselemente in Belüftungsanlagen verwendet. Aufgrund ihrer flexiblen Biegsamkeit eignen sich die Wellrohre insbesondere auch zum Bau von Fluidleitungen mit nicht geradliniger Leitungsführung. Üblicherweise werden die Wellrohre entsprechend dem Längenbedarf betreffender Leitungsabschnitte zugeschnitten und die auf Länge geschnittenen Abschnitte mit anderen Leitungskomponenten verbunden. Die vorliegende Erfindung befasst sich mit der Verbindungs- und Anschlusstechnik von Wellrohren im Bereich der Abgastechnik, der Lüftungstechnik, der Abwassertechnik und dgl. Die Wahl der Materialien hängt insbesondere von den Temperaturen ab, denen die Wellrohre im Betrieb ausgesetzt sein werden. Es kommen Kunststoffmaterialien in Frage, etwa schwer entflammbare oder hitzebeständige Polypropylene (PPs, PPh), oder Metalle, etwa Edelstahl oder Aluminium.

Aus der DE 297 03 964 U1 ist eine Anschlussanordnung der eingangs genannten Art zur Verbindung der Enden von zwei Wellrohren bekannt, die bekannte Anschlussanordnung weist als erstes Ringelement einen Gewindering auf, welcher von einem axialen Ende des Wellrohres her auf das Wellrohr aufsetzbar ist. Dem Gewindering folgt an dem axialen Ende des Wellrohres ein Verankerungsring, der mit einem radial nach innen gerichteten Vorsprung in ein Wellental des Wellenrohres eingreift. Dem Verankerungsring folgt an dem axialen Ende des Wellrohres ein Dichtring, der ebenfalls einen radial nach innen gerichteten und in ein Wellental des Wellrohres eingreifenden Vorsprung aufweist. Der Verankerungsring und der Dichtring sind radial außen von einer Muffe überdeckt, welche das zweite Ringelement darstellt und ein Innengewinde aufweist, an dem sie mit dem Außengewinde des ersten Ringelementes verschraubt ist. Mit Hilfe des ersten Ringelementes (Gewindering) wird der erforderliche Druck auf den Dichtring ausgeübt, so dass dieser zwischen dem Verankerungsring und einer Anschlagfläche des zweiten Ringelementes (Muffe) eingepresst ist. Bei dem zweiten Ringelement handelt es sich um eine Doppelmuffe mit einer jeweiligen Muffenöffnung an beiden axialen Enden. Beide Muffenöffnungen sind mit einem Innengewinde zum Verschrauben eines jeweiligen Gewinderinges versehen, so dass zwei Wellrohre, die mit betreffenden Gewinderingen, Verankerungsringen und Dichtringen ausgestattet sind, miteinander verbunden werden können.

Aus der DE 19537479 A1 ist eine weitere Anschlussanordnung bekannt, bei der ein kurzer konischer Abschnitt ausgebildet ist, welcher an der im Querschnitt kreisförmigen Ringdichtung anliegt.

Der Erfindung liegt die Aufgabe zugrunde, ein Endanschlussmittel der eingangs genannten Art bereitzustellen, welches eine dichte und mechanisch stabile Verbindung eines Wellrohres mit einer weiteren Leitungskomponente ermöglicht und zu seiner Realisierung vergleichsweise wenige, preiswert herstellbare und einfach zu montierende Teile erfordert.

Zur Lösung dieser Aufgabe wird ein Endanschlussmittel gemäß Anspruch 1 vorgeschlagen.

Der konische Innenumfangsabschnitt sorgt dafür, dass bei der Verbindung und der dabei erfolgenden axialen Annäherungen und ggf. gegenseitigen Durchdringung der beiden Ringelemente eine den Zusammenhalt der Komponenten des Endanschlussmittels und des Wellrohres sichernde Klemmkraft erzeugt werden kann, mittels welcher der Dichtring zuverlässig verpresst wird, so dass er eine wirksame Dichtung bilden kann.

Ein gesonderter, den Zusammenhalt des Ensembles sichernder Verankerungsring, wie er aus der DE 297 03 964 U1 bekannt ist, ist bei dem erfindungsgemäßen Endanschlussmittel nicht erforderlich, so dass gegenüber dem Stand der Technik bei dem Endanschlussmittel nach der Erfindung nicht nur die Teilezahl verringert, sondern auch die Montage vereinfacht ist.

Das erste Ringelemente hat an einer seiner Stirnseiten eine Anschlagfläche, mit der es in der bestimmungsgemäßen Anordnung am Wellrohr an einer Gegenanschlagfläche des Dichtringes axial abgestützt ist, wobei das zweite Ringelement mit einem konischen Innenumfangsabschnitt den Dichtring radial außen überdeckend beaufschlagt und mit dem ersten Ringelement verspannt ist. Das zweite Ringelement bildet somit eine Muffe, deren konischer Innenumfangsabschnitt die Kraft bei der gegenseitigen axialen Verspannung der Ringelemente teilweise in eine den Dichtring beaufschlagende radiale Kraftkomponente übersetzt.

Vorzugsweise weist das erste Ringelement einen konischen Außenumfangsabschnitt auf, der komplementär zu dem konischen Innenumfangsabschnitt des zweiten Ringelementes ausgebildet ist und mit letzterem in der bestimmungsgemäßen Anordnung am Wellrohr umlaufend in Berührung steht. Mittels der einander komplementär konischen Umfangsabschnitte kann bei der axialen Verspannung der beiden Ringelemente eine radial nach innen gerichtete Klemmkraft auch über die Ringelemente unmittelbar zusätzlich zu der Verpressung des Dichtringes erzeugt werden, um die mechanische Stabilität des Zusammenhalts des Ensembles am Wellrohr noch weiter zu verbessern.

Vorzugsweise sind die Ringelemente miteinander verschraubbar, um sie am Wellrohr miteinander zu verspannen.

Gemäß einer Ausführungsform der Erfindung sind die Schraubgewinde zum Verschrauben der Ringelemente an einander komplementären konischen Umfangsabschnitten der Ringelemente vorhanden.

Die Ringelemente können z. B. aus Kunststoff, insbesondere aus einem schwer entflammbaren und/oder hitzebeständigen Polypropylen, oder aus Metall, etwa Edelstahl oder Aluminium, gebildet sein. Auch Materialpaarungen Kunststoff-Metall sind denkbar.

Vorzugsweise ist das zweite Ringelement ein Anschlussadapter mit spezifischen Mitteln zum Anschließen einer weiteren Leitungskomponente, die mit dem Wellrohr zu verbinden ist. Bei dieser weiteren Leitungskomponente kann es sich z. B. um ein starres Anschlussrohr oder dgl. handeln.

Gemäß einer weiteren Ausführungsform der Erfindung weist das zweite Ringelement Mittel zum Anschließen eines weiteren flexibel biegsamen Wellrohres auf, wobei es vorzugsweise so ausgebildet ist, dass es an seinen entgegengesetzten axialen Enden mit einem jeweiligen ersten Ringelement verbindbar ist, um zwei mit einem jeweiligen Dichtring und dem jeweiligen ersten Ringelement präparierte Wellrohre aneinander anzuschließen. Das zweite Ringelement bildet somit eine Doppelmuffe mit zwei Muffenöffnungen an den einander entgegengesetzten axialen Enden. In die Muffenöffnungen werden die einander angenäherten Enden der beiden Wellrohre aufgenommen, wobei die ersten Ringelemente mit der Doppelmuffe verbunden, vorzugsweise verschraubt werden, um die Dichtringe mit einer radial nach innen gerichteten Kraftkomponente zu beaufschlagen und somit einen mechanisch stabilen und fluiddichten Übergang von einem Wellrohr zum anderen Wellrohr herzustellen.

Gegebenenfalls kann das zweite Ringelement als Doppelmuffe zur Verbindung von Wellrohren unterschiedlicher Rohrdurchmesser ausgebildet sein. Vorzugsweise ist das zweite Ringelement jedoch in Bezug auf eine zur Ringachse orthogonale Ebene - abgesehen von Gewindezügen - im Wesentlichen symmetrisch ausgebildet, so dass es zur Verbindung von zwei Wellrohren gleicher Rohrdurchmesser dienen kann.

Ausführungsbeispiele der Erfindung werden nachstehend unter Bezugnahme auf die Figuren näher erläutert.
- Fig. 1: zeigt in einer Seitenansicht ein erstes Ausführungsbeispiel eines Endanschlussmittels nach der Erfindung mit im Längs- schnitt dargestellten Elementen an einem Wellrohrende vor Herstellung der Verbindung zwischen dem ersten Ringele- ment und dem zweiten Ringelement.
- Fig. 2: zeigt ein zweites Ausführungsbeispiel eines Endanschluss- mittels nach der Erfindung mit im Längsschnitt dargestellten Komponenten vor Herstellung der Verbindung zwischen den ersten Ringelementen und dem zweiten Ringelement, wobei das Endanschlussmittel zur Verbindung der ebenfalls in Fig. 2 gezeigten Wellrohre dient.
- Fig. 3: zeigt in einer der Fig. 1 ähnlichen Darstellung ein zweites Ausführungsbeispiel eines Endanschlussmittels nach der Erfindung mit im Längsschnitt dargestellten Elementen an einem Wellrohrende.

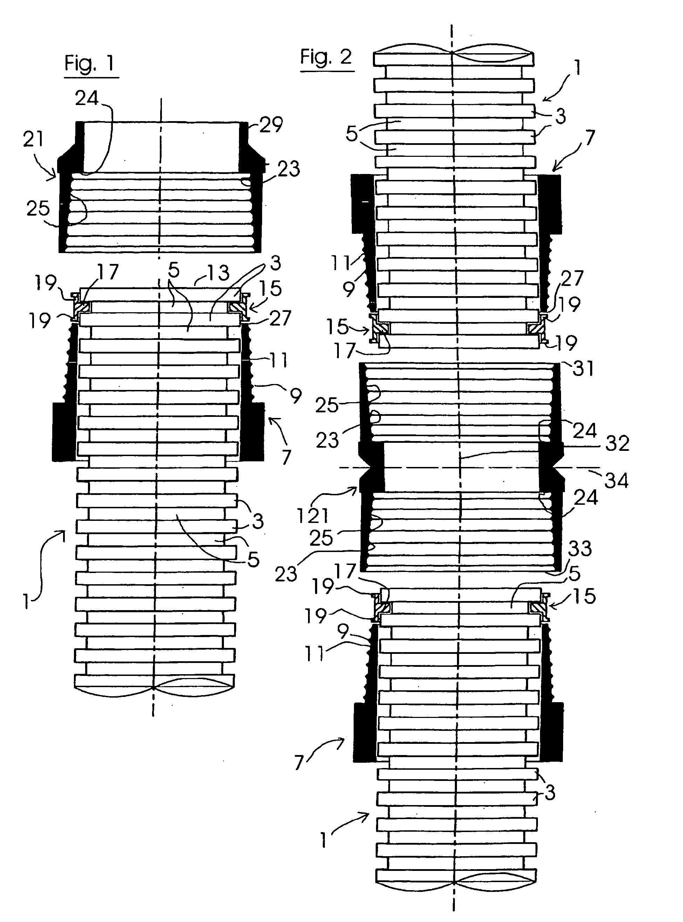

In Fig. 1 ist ein flexibel biegsames Wellrohr 1, z. B. aus Polypropylen, vereinfacht dargestellt. Es hat abwechselnd Wellenerhebungen 3 (Bereiche vergrößerten Durchmessers) und Wellentäler 5 (Bereiche verringerten Durchmessers). Auf das Wellrohr 1 ist ein erstes Ringelement 7 des Endanschlussmittels nach der Erfindung aufgesetzt. Das erste Ringelement 7 ist ein Nippel mit einem Außengewinde 9 auf einer konischen Gewindeträgerfläche 11. Der Innendurchmesser des ersten Ringelementes 7 entspricht mit geringem Zusatzspiel dem durch die Wellenberge 3 definierten größeren Außendurchmesser des Wellrohres 1.

In der Nähe des axialen Endes 13 des Wellrohres 1 sitzt ein Dichtring 15 des Endanschlussmittels auf dem Wellrohr 1 auf. Der Dichtring 15 greift mit einem radial nach innen gerichteten Vorsprung 17 bzw. einer Dichtlippe 17 in ein Wellental 5 des Wellrohres 1 umlaufend ein. Der Dichtring 15 hat ferner zwei umlaufende Schultern 19, mit denen er außen an den Wellenbergen 3 abgestützt ist, die den Vorsprung 17 zwischen sich aufnehmen. Bei dem Dichtring 15 handelt es sich vorzugsweise um eine elastomere Dichtung, etwa eine Silikondichtung oder eine EPDM-Dichtung.

Das in Fig. 1 dargestellte Muffenelement 21 ist ein zweites Ringelement, das mit dem ersten Ringelement 7 an dem Wellrohr 1 von dem einen axialen Ende 13 des Wellrohres 1 her unter Pressung und radial äußerer Überdeckung des Dichtringes 15 durch Verschrauben zu verbinden ist. Es hat zu diesem Zweck ein Innengewinde 23 an einer konischen Gewindeträgerfläche 25, die einen konischen Innenumfangsabschnitt darstellt. Beim Verschrauben des zweiten Ringelementes 21 (Muffe) mit dem ersten Ringelement 7 (Nippel) werden die beiden Ringelemente 7, 21 miteinander verspannt, wobei das zweite Ringelement 21 mit dem konischen Innenumfangsabschnitt 25 auf den Dichtring 15 mit einer radial nach innen gerichteten Kraftkomponente drückt und diesen dabei umlaufend verpresst, so dass eine zuverlässige Abdichtung entsteht. Gleichzeitig kommt es zum Verklemmen der Elemente 7, 15, 21 an dem Wellrohr 1, wodurch ein mechanisch stabiler Zusammenhalt des Ensembles der Komponenten des Endanschlussmittels an dem Wellrohr 1 erreicht wird. Dabei stützt sich das erste Ringelement 7 mit einer stirnseitigen Anschlagfläche 27 an der benachbarten Schulter 19 des Dichtringes 15 axial ab. Das zweite Ringelement 21 hat eine Ringschulterfläche 24 als Anschlagfläche.

Das zweite Ringelement 21 ist ein Adapterteil mit einem starr plastifizierten, zylindrischen Abgang 29, an dem ein betreffendes starres Anschlussbauteil angeschlossen werden kann. Hierbei kann es sich z. B. um ein starres Leitungsrohr, einen Reinigungskasten, ein T-Stück und dgl. handeln. Das Endanschlussmittel gemäß Fig. 1 kann auch als stabiler Endabschluss des Wellrohres 1 verwendet werden, ohne dass daran weitere Leitungselemente angeschlossen werden. Dieser Endabschluss kann z. B. zur Befestigung des Wellrohres 1 mittels einer das zweite Ringelement 21 oder/und ggf. das erste Ringelement 7 umgreifenden Befestigungsschelle an einer Innenwand eines Schornsteinkopfes genutzt werden, etwa im Falle der Verwendung des Wellrohres 1 als Abgasleitungsrohr bzw. Kaminrohr einer Heizanlage, insbesondere einer Heizanlage mit Brennwertkessel.

Fig. 2 zeigt als zweites Ausführungsbeispiel der Erfindung ein Endanschlussmittel, das zur Verbindung zweier Wellrohre 1 vorgesehen ist. Elemente in Fig. 2, die Elementen in Fig. 1 funktionsmäßig entsprechen, sind mit gleichen Bezugszeichen gekennzeichnet, so dass insoweit auf die Beschreibung des ersten Ausführungsbeispiels Bezug genommen werden kann. Bei dem zweiten Ausführungsbeispiel sind zwei erste Ringelemente 7 und zwei Dichtringe 15 (je eins pro Wellrohr 1) vorgesehen. Die ersten Ringelemente 7 und die Dichtringe 15 in Fig. 2 entsprechen dem ersten Ringelement 7 und dem Dichtring 15 in Fig. 1.

Das zweite Ringelement 121 in Fig. 2 ist eine Doppelmuffe mit zwei Muffenabschnitten 31, 33 an den einander entgegengesetzten Seiten. Jeder der Muffenabschnitte 31, 33 weist ein Innengewinde 23 an dem betreffenden konischen Gewindeträgerabschnitt 25 auf. Die ersten Ringelemente 7 sind mit den Muffenabschnitten 31, 33 verschraubbar, um an beiden Anschlussenden des zweiten Ringelementes 121 einen fluiddichten und mechanisch stabilen Übergang unter Ausübung einer Klemmkraft mit einer radial nach innen gerichteten Kraftkomponente an den Wellrohren 1 herzustellen.

Ein Muffenteil 121 gemäß Fig. 2 kann z. B. aus zwei Muffenteilen 21 aus Fig. 1 hergestellt werden, wenn letztere an ihren Abgängen 29 miteinander verbunden, etwa miteinander verschweißt werden. Das Muffenteil 121 ist in Bezug auf die zur Ringachse 32 orthogonale Ebene 34 symmetrisch, ggf. abgesehen von den Verläufen der Gewindezüge.

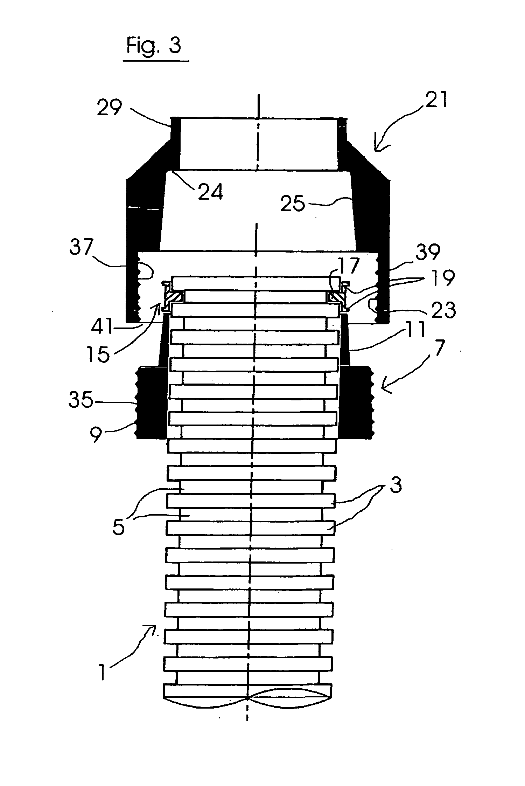

In Fig. 3 ist ein Ausführungsbeispiel eines Endanschlussmittels nach der Erfindung dargestellt, welches als Variante der in Fig. 1 gezeigten Ausführungsform verstanden werden kann. Im Unterschied zu dem Ausführungsbeispiel nach Fig. 1 sind die Gewinde 9, 23 beim Ausführungsbeispiel in Fig. 3 nicht an den einander komplementären konischen Flächen 11, 25 der beiden Ringelemente 7, 21 vorgesehen, sondern an nicht konischen zylindrischen Gewindeträgerflächen 35, 37. Die einander komplementären konischen Umfangsflächen 11, 25 der Ringelemente 7, 21 sind vorzugsweise glatt und kommen beim Verschrauben der Ringelemente 7, 21 miteinander in Berührung, wobei der konische Innenumfangsabschnitt 25 des als Muffe ausgebildeten zweiten Ringelementes 21 den Dichtungsring 15 mit einer Klemmkraft mit radial nach innen gerichteter Kraftkomponente beaufschlagt.

Im Beispielsfall der Fig. 3 befindet sich der ringzylindrische Gewindeabschnitt 39 am Muffenöffnungsende 41 des zweiten Ringelementes 21 in axialer Nachbarschaft zu dem Bereich mit dem konischen Innenumfangsabschnitt 25.

Bei dem ersten Ringelement 7 befindet sich der ringzylindrische Gewindeabschnitt ebenfalls in axialer Nachbarschaft zu dem Bereich mit der konischen Umfangsfläche 11.

Bei allen Ausführungsbeispielen liegt der Dichtring im zusammengebauten Zustand des betreffenden Endanschlussmittels in einem Bereich, der vor

Kondensatablagerung geschützt ist, etwa im Falle der Nutzung des betreffenden Wellrohres zur Abgasleitung.

## Patentansprüche

1. Endanschlussmittel für ein Wellrohr,
umfassend
- ein erstes Ringelement (7), das von einem axialen Ende (13) des Wellrohres (1) her auf das Wellrohr (1) an dessen Umfang umlaufend passend oder ggf. mit geringem Spiel aufsetzbar ist, um es bestimmungsgemäß anzuordnen, wobei das erste Ringelement (7) einen Innendurchmesser aufweist, welcher dem durch die Wellenberge (3) definierten Außendurchmesser des Wellrohrs (1) im Wesentlichen entspricht,
- einen Dichtring (15), der zu seiner bestimmungsgemäßen Anordnung dem ersten Ringelement (7) folgend von dem einen axialen Ende (13) des Wellrohres her auf das Wellrohr an dessen Umfang umlaufend aufsetzbar ist, wobei er einen radial inneren Vorsprung (17) aufweist, der in der bestimmungsgemäßen Anordnung des Dichtringes (15) auf dem Wellrohr (1) in ein Wellental (5) des Wellrohres (1) eingreift, und wobei er zwei umlaufende Schultern (19) aufweist, mit denen er an benachbarten Wellenbergen (3) des Wellentals (5) abgestützt ist, und
- ein zweites Ringelement (21), das mit dem ersten Ringelement (7) an dem Wellrohr (1) von dem einen axialen Ende (13) des Wellrohres (1) her unter Pressung und radial äußerer Überdeckung des Dichtringes (15) zu verbinden ist,
**dadurch gekennzeichnet,**
**dass** das erste Ringelement (7) einen konischen Außenumfangsabschnitt (11) aufweist, der komplementär zu einem konischen Innenumfangsabschnitt (25) des zweite Ringelementes (21) ausgebildet ist, wobei der konische Innenumfangsabschnitt (25) den Dichtring (15) radial außen überdeckt und mit dem konischen Außenumfangsabschnitt (11) in der bestimmungsgemäßen Anordnung am Wellrohr (1) umlaufend in Berührung steht, so dass das zweite Ringelement (21) mit dem ersten Ringelement (7) verspannt ist, wobei der konische Innenumfangsabschnitt (25) den Dichtring (15) in der bestimmungsgemäßen Anordnung an dem Wellrohr (1) unter Ausübung einer Klemmkraft mit einer radial nach innen gerichteten Kraftkomponente beaufschlagt, wobei das erste Ringelement (7) an einer seiner Stirnseiten eine Anschlagfläche (27) aufweist, mit der es in der bestimmungsgemäßen Anordnung am Wellrohr (1) an einer als Gegenanschlagfläche dienenden Schulter (19) des Dichtringes (15) axial abgestützt ist.

2. Endanschlussmittel nach Anspruch 1, **dadurch gekennzeichnet, dass** die Ringelemente (7, 21) miteinander verschraubbar sind.

3. Endanschlussmittel nach Anspruch 2, **dadurch gekennzeichnet, dass** die Schraubgewinde (9, 23) zum Verschrauben der Ringelemente (7, 21) an den einander komplementären konischen Umfangsabschnitten (11, 25) der Ringelemente (7, 21) vorhanden sind.

4. Endanschlussmittel nach einem der vorhergehenden Ansprüche, **dadurch gekennzeichnet, dass** die Ringelemente (7, 21) aus Kunststoff, insbesondere aus einem schwer entflammbaren und/ oder hitzebeständigen Polypropylen (PPs bzw. PPh), oder aus Metall gebildet sind.

5. Endanschlussmittel nach einem der vorhergehenden Ansprüche, **dadurch gekennzeichnet, dass** das zweite Ringelement (21; 121) Mittel (29; 33) zum Anschließen einer weiteren Leitungskomponente aufweist, um letztere mit dem Wellrohr (1) zu verbinden.

6. Endanschlussmittel nach Anspruch 5, **dadurch gekennzeichnet, dass** das zweite Ringelement (121) Mittel (33) zum Anschließen eines weiteren Wellrohres aufweist.

7. Endanschlussmittel nach Anspruch 6, **dadurch gekennzeichnet, dass** das zweite Ringelement (121) so ausgebildet ist, dass es an seinen entgegengesetzten axialen Enden mit einem jeweiligen ersten Ringelement (7) verbindbar ist, um zwei mit einem jeweiligen Dichtring (15) und dem jeweiligen ersten Ringelement (7) präparierte Wellrohre (1) aneinander anzuschließen.

8. Endanschlussmittel nach Anspruch 7, **dadurch gekennzeichnet, dass** das zweite Ringelement zur Verbindung von Wellrohren unterschiedlicher Rohrdurchmesser ausgebildet ist.

9. Endanschlussmittel nach Anspruch 7, **dadurch gekennzeichnet, dass** das zweite Ringelement (121) in Bezug auf eine zur Ringachse (32) orthogonale Ebene (34) - abgesehen vom Richtungssinn von Gewindezügen - im Wesentlichen symmetrisch ausgebildet ist.

10. Endanschlussmittel nach einem der Ansprüche 7 bis 9, **gekennzeichnet durch** wenigstens ein weiteres erstes Ringelement (7) und **durch** wenigstens einen weiteren Dichtring (15).

## Claims

1. An end connection means for a corrugated tube,
comprising
- a first ring element (7) which from one axial end (13) of the corrugated tube (1) can be mounted on the corrugated tube (1) so as to fit peripherally around its circumference or optionally with a small amount of play so that it can be arranged as specified, wherein the first ring element (7) has an inner diameter which substantially corresponds to the outer diameter of the corrugated tube (1) defined by the corrugation ridges (3),
- a sealing ring (15) which for its specified arrangement following the first ring element (7) can be mounted from the axial end (13) of the corrugated tube peripherally around its circumference, wherein it has a radially inner projection (17) which, in the specified arrangement of the sealing ring (15) on the corrugated tube (1), engages in a corrugation trough (5) of the corrugated tube (1), and wherein it has two annular shoulders (19) with which it is supported on adjacent corrugation ridges (3) of the corrugation trough (5),
- a second ring element (21) which is to be connected to the first ring element (7) on the corrugated tube (1) from the axial end (13) of the corrugated tube (1) under pressure and with radially outer overlapping of the sealing ring (15),
**characterised in**
**that** the first ring element (7) has a conical outer circumferential portion (11) which is formed complementary to a conical inner circumferential portion (25) of the second ring element (21),
wherein the conical inner circumferential portion (25) overlaps the sealing ring (15) radially outwardly and is in contact peripherally with the conical outer circumferential portion (11) in its specified arrangement on the corrugated tube (1) so that the second ring element (21) is braced with the first ring element (7), wherein the conical inner circumferential portion (25) acts on the sealing ring (15) in its specified arrangement on the corrugated tube (1) so as to exert a clamping force with a radially inwardly directed force component, wherein, at its end faces, the first ring element (7) has an abutment surface (27) with which, in its specified arrangement on the corrugated tube (1), it is axially supported on a shoulder (19) of the sealing ring (15) serving as a counterabutment surface.

2. An end connection means according to Claim 1, **characterised in that** the ring elements (7,21) can be screwed together.

3. An end connection means according to Claim 2, **characterised in that** the screw threads (9,23) for screwing the ring elements (7,21) are provided on the mutually complementary conical circumferential portions (11,25) of the ring elements (7,21).

4. An end connection means according to any one of the preceding Claims, **characterised in that** the ring elements (7,21) are formed from plastics material, in particular of a non-flammable and/or heat-resistant polypropylene (PPs or PPh), or from metal.

5. An end connection means according to any one of the preceding Claims, **characterised in that** the second ring element (21;121) has means (29;33) for connecting a further duct component so as to connect the latter to the corrugated tube (1).

6. An end connection means according to Claim 5, **characterised in that** the second ring element (121) has means (33) for connecting a further corrugated tube.

7. An end connection means according to Claim 6, **characterised in that** the second ring element (121) is so formed that, at its opposite axial ends, it can be connected to a respective first ring element (7) so as to connect to one another two corrugated tubes (1) provided with a respective sealing ring (17) and the respective first ring element (7).

8. An end connection means according to Claim 7, **characterised in that** the second ring element is designed to connect corrugated tubes of different tube diameter.

9. An end connection means according to Claim 7, **characterised in that** the second ring element (121) is formed substantially symmetrically in relation to a plane (34) orthogonal to the ring axis (32), irrespective of the directional sense of thread leads.

10. An end connection means according to any one of Claims 7 to 9, **characterised by** at least one further first ring element (7) and by at least one further sealing ring (15).

## Revendications

1. Moyen de raccordement d'extrémité pour un tuyau ondulé,
comprenant
- un premier élément de bague (7), qui peut être posé de façon adaptable ou éventuellement avec un faible jeu depuis une extrémité (13) axiale du tuyau ondulé (1) sur le tuyau ondulé (1) en périphérie sur son pourtour, afin de le placer correctement, le premier élément de bague (7) présentant un diamètre intérieur qui correspond sensiblement au diamètre extérieur, défini par les sommets d'ondulation (3), du tuyau ondulé (1),
- une bague d'étanchéité (15), qui peut être posée pour son agencement correct, en suivant le premier élément de bague (7), depuis l'une des extrémités axiales (13) du tuyau ondulé (1) sur le tuyau ondulé en périphérie sur son pourtour, en sachant qu'elle présente une saillie (17) radialement intérieure, qui s'engage dans un creux d'ondulation (5) du tuyau ondulé (1) lorsque la bague d'étanchéité (15) est placée correctement sur le tuyau ondulé (1), sachant qu'elle présente deux épaulements (19) périphériques, avec lesquels il est soutenu sur des sommets d'ondulation (3) voisins du creux d'ondulation (5), et
- un second élément de bague (21), qui doit être relié au premier élément de bague (7) sur le tuyau ondulé (1) à partir de l'une des extrémités (13) axiales du tuyau ondulé (1) avec compression et recouvrement radialement extérieur de la bague d'étanchéité (15),
**caractérisé en ce que** le premier élément de bague (7) présente une première partie périphérique extérieure (11) conique, qui est conçue de façon complémentaire par rapport à une partie périphérique intérieure (25) conique du second élément de bague (21),
la partie périphérique intérieure (25) conique recouvrant la bague d'étanchéité (15) radialement à l'extérieur et étant en contact en périphérie avec la partie périphérique extérieure (11) conique dans l'agencement correct sur le tuyau ondulé (1), de sorte que le second élément de bague (21) est tendu avec le premier élément de bague (7), la partie périphérique intérieure (25) conique sollicitant la bague d'étanchéité (15) dans l'agencement correct sur le tuyau ondulé (1) en exerçant une force de serrage avec une composante de force dirigée radialement vers l'intérieur, le premier élément de bague (7) présentant sur l'un de ses côtés avant une surface de butée (27) avec laquelle il est soutenu axialement dans l'agencement correct sur le tuyau ondulé (1) sur un épaulement (19), servant de surface de contre-butée, de la bague d'étanchéité (15).

2. Moyen de raccordement d'extrémité selon la revendication 1, **caractérisé en ce que** les éléments de bague (7, 21) peuvent être vissés les uns avec les autres.

3. Moyen de raccordement d'extrémité selon la revendication 2, **caractérisé en ce que** les filetages de vis (9, 23) pour le vissage des éléments de bague (7, 21) sont présents sur les parties périphériques (11, 25) coniques et complémentaires entre elles des éléments de bague (7, 21).

4. Moyen de raccordement d'extrémité selon l'une quelconque des revendications précédentes,
**caractérisé en ce que** les éléments de bague (7, 21) sont formés en plastique, en particulier à base d'un polypropylène (PPs ou PPH) difficilement inflammable et/ou résistant à la chaleur ou en métal.

5. Moyen de raccordement d'extrémité selon l'une quelconque des revendications précédentes,
**caractérisé en ce que** le second élément de bague (21 ; 121) présente des moyens (29 ; 33) pour le raccordement d'un autre composant de conduite, afin de relier celui-ci au tuyau ondulé (1).

6. Moyen de raccordement d'extrémité selon la revendication 5, **caractérisé en ce que** le second élément de bague (121) présente des moyens (33) pour le raccordement d'un autre tuyau ondulé.

7. Moyen de raccordement d'extrémité selon la revendication 6, **caractérisé en ce que** le second élément de bague (121) est conçu de telle sorte qu'il peut être relié sur ses extrémités axiales opposées à un premier élément de bague (7) respectif, afin de raccorder l'un à l'autre deux tuyaux ondulés (1) préparés avec une bague d'étanchéité (15) respective et le premier élément de bague (7) respectif.

8. Moyen de raccordement d'extrémité selon la revendication 7, **caractérisé en ce que** le second élément de bague est conçu pour la liaison de tuyaux ondulés de diamètres différents.

9. Moyen de raccordement d'extrémité selon la revendication 7, **caractérisé en ce que** le second élément de bague (121) est conçu sensiblement symétrique par rapport à un plan (34) perpendiculaire à l'axe de la bague (32) - en dehors du sens de direction des pas de filetage.

10. Moyen de raccordement d'extrémité selon l'une quelconque des revendications 7 à 9, **caractérisé par** au moins un autre premier élément de bague (7) et par au moins une autre bague d'étanchéité (15).
